# EUROPEAN PATENT SPECIFICATION

(11) **EP 1 819 948 B1**
(45) Date of publication and mention of the grant of the patent: **31.12.2008**
(21) Application number: 05815753.8
(22) Date of filing: 10.11.2005
(51) Int. Cl.: F16H 55/34, F16H 7/02, F02B 67/06

(54) **A BELT DRIVE WITH A FRICTION WHEEL**
RIEMENANTRIEB MIT EINEM REIBRAD
ENTRAINEMENT A COURROIE PRESENTANT UNE ROUE DE FRICTION

(30) Priority: 10.11.2004 WO PCT/IT2004/000617; 26.09.2005 WO PCT/EP2005/054809
(43) Date of publication of application: 22.08.2007
(73) Proprietor: DAYCO EUROPE S.r.l., 66100 Chieti (IT)
(72) Inventor: DI GIACOMO, Tommaso, I-66010 S. MARTINO SULLA MARRUCINA (IT); CARICCIA, Gianluca, I-10090 ROMANO CANAVESE (IT)
(74) Representative: Jorio, Paolo
(86) International application number: PCT/EP2005/055885
(87) International publication number: WO 2006/051094

(56) References cited:
- EP-A- 0 338 112
- EP-A- 1 464 870
- US-A- 4 439 173
- US-A1- 2003 129 350
- PATENT ABSTRACTS OF JAPAN vol. 1995, no. 07, 31 August 1995 (1995-08-31) -& JP 07 098053 A (TOPPAN PRINTING CO LTD), 11 April 1995 (1995-04-11)

## Description

### TECHNICAL FIELD

The present invention relates to a belt drive with a friction wheel for an internal-combustion (IC) engine of a vehicle, according to the preamble of claim 1.

### BACKGROUND ART

The IC engine of a vehicle is generally connected to an electrical machine for the generation of electrical energy by means of a belt accessory drive. Accessory drives are known that comprise a pulley connected to a crankshaft of the IC engine, a pulley connected to the electrical machine, and a belt drive of the poly-V type wound around the aforesaid pulleys and possibly driving other engine accessories, such as a compressor of the air conditioning system.

As it is known, internal combustion engines are equipped with a cooling circuit in which a pump driven by the crankshaft circulates a coolant fluid adapted to subtract heat from the engine, in use, to maintain the temperature of the engine components within an acceptable range of values.

According to a conventional solution, the water pump is permanently driven by the crankshaft via a belt or gear transmission.

A known, alternative solution consists in driving the pump by a friction wheel that takes motion from the crankshaft and a pulley fitted on the water pump shaft and adapted to cooperate with one another by rolling friction.

This arrangement can be used either as a permanent drive, i.e. allowing the water pump to be permanently driven by the crankshaft, or as a selectively activatable drive.

This latter option is used in order to let the IC engine reach a warmed-up condition as rapidly as possible after start up, for the two-fold purpose of reducing polluting emissions and allowing the engine to rapidly reach maximum efficiency. To this end, there have recently been proposed control devices adapted to selectively connect and disconnect the friction wheel to the water pump pulley, and in particular to disconnect the pump at engine ignition until such warmed-up condition is reached.

It is known from DE-A-10309062 and EP-A-1464870 to drive the friction wheel by rolling contact with the back surface of the belt of the accessory drive at a section thereof that is wound around the crankshaft pulley. During normal operation, the friction wheel co-operates by friction both with the belt back and with the water pump pulley. At engine start up, an actuator disconnects the friction wheel from the water pump pulley and therefore decouples the water pump from the crankshaft.

DE-A-103 09 062 discloses a drive of the aforementioned type, in which the friction wheel has a peripheral elastomeric or plastics friction annulus having a sculpted profile for water drainage, in order to improve torque transmission to the water pump without any substantial slippage of the friction wheel in bad weather conditions.

Although effective for the purpose of reducing slippage, the use of a "soft" friction annulus is not free from drawbacks. In fact, the shearing stresses transmitted both by the belt back and by the water pump pulley to the friction wheel are opposite to one another and act jointly; this radially deforms the friction annulus that tends to wedge between the belt back and the water pump pulley, thereby causing anomalous stresses which reduce the reliability and duration of the friction wheel.

The closest prior art document EP-A-1 464 870 discloses another belt and friction wheel drive of the type briefly discussed above, in which the friction wheel is made of plastics material and the water pump pulley is lined by a layer of soft material. Although the friction wheel is said to have a sculpted profile to assist drainage, no detail of such profile is disclosed.

The use of sculpted profiles (e.g. grooved profiles or tyre-type profile), particularly in combination with a comparatively "hard" material of the friction wheel with respect to the belt back and water pump pulley, has proven to bring about additional problems concerning both excessive wear of the belt, particularly where continuous circumferential grooves are used, and noise generation in use, particularly when circumferentially discontinuous, periodic patterns are used.

In conclusion, torque transmission in wet condition, belt wear and noise are parameters that are difficult to be optimized all together because they call for contradictory measures.

### DISCLOSURE OF INVENTION

The purpose of the present invention is to provide a belt and friction wheel drive with high performance in wet conditions, which is free from the additional drawbacks, such as quick belt wear and noise, described above.

According to the present invention, there is provided a belt drive with a friction wheel, as defined in Claim 1.

### BRIEF DESCRIPTION OF THE DRAWINGS

For a better understanding of the present invention there now follows a description of a preferred embodiment thereof, which is provided purely by way of non-limiting example and with reference to the attached drawings, in which:
- Figure 1 is a front view of a belt drive with a friction wheel according to the present invention;
- Figure 2 is an enlarged cross-sectional view of a component of the belt drive taken along the line II-II of Figure 1;
- Figure 3 is a partially sectioned side view of the friction wheel of the belt drive of figure 1;
- Figure 4 shows an enlarged detail of a surface profile of the friction wheel of Figure 3;
- Figure 5 is a cross section taken along line V-V of Figure 4;
- Figure 6a is a comparative diagram showing the speed of a crankshaft pulley, the friction wheel and a water pump pulley as a function of time during a first test performed with a flat friction wheel,
- Figure 6b is a comparative diagram showing the speed difference between the crankshaft pulley and the friction wheel during the first test;
- Figure 7a is a diagram corresponding to that of figure 6a and obtained during a second test performed with a friction wheel in accordance with the present invention;
- Figure 7b a diagram corresponding to that of figure 6b and obtained during the second test;
- Figure 8 is a comparative diagram showing the noise generated by the engine as a function of the engine speed, with the belt drive of the invention and different kinds of friction wheels; and
- Figure 9 is a comparative diagram showing the belt wear as a function of time, with the belt drive of the invention and with different kinds of friction wheels.

### BEST MODE FOR CARRYING OUT THE INVENTION

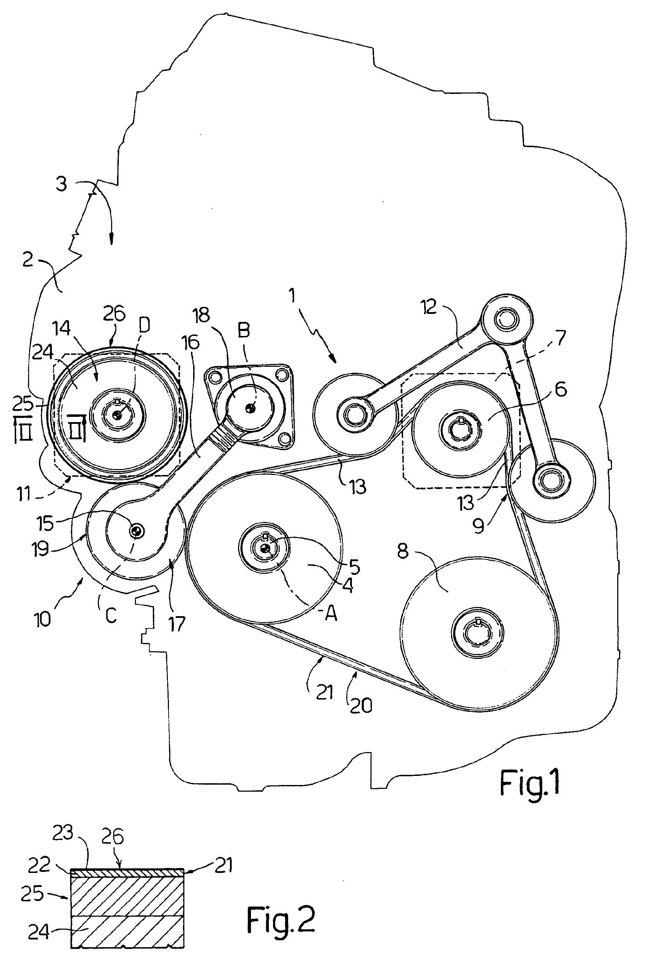

Designated as a whole by the reference number 1 in Figure 1 is a belt drive set in the vicinity of a vertical wall 2 of an IC engine 3 of a motor vehicle.

The drive 1 comprises: a crankshaft pulley 4, which is rigidly connected to a crankshaft 5 of the engine 3 and is rotatable about an axis A of the crankshaft 5; a pulley 6 connected to a reversible electrical machine 7; a pulley 8 connected to a compressor of an air conditioning system, not shown; and a poly-V belt 9 wound around the pulleys 4, 6 and 8 for rotational connection of the crankshaft 5 to the reversible electrical machine 7.

The drive 1 further comprises a two-armed belt tensioner 12, set in the proximity of the reversible electrical machine 7 and acting on respective branches 13 of the belt 9, comprised between the crankshaft pulley 4 and the pulley 6, and between the pulley 8 and the pulley 6, respectively.

The drive 1 further includes a friction-wheel assembly 10 for selectively driving a water pump 11. The friction-wheel assembly 10 comprises a friction wheel 17 which is adapted to cooperate by rolling friction with a back 20 of the belt 9 at a section thereof that is wound around the crankshaft pulley 4, as well as with a friction pulley 14 connected to a drive shaft 15 of the water pump 11 and having an axis D.

The friction wheel assembly 10 includes an arm 16 hinged at one end about an axis B parallel to the axis A and supporting at its opposite end the friction wheel 17, which is freely rotatable about an axis C carried by arm 16 and parallel to the axis B.

The arm 16 is set between the pulley 4 and the friction pulley 14, whilst the axis B and the axis C are set on opposite sides with respect to the straight line joining the centres of the pulley 4 and of the friction pulley 14, respectively. The friction-wheel assembly 10 further comprises an actuating unit 18 for moving the arm 16 radially with respect to the axis A between an engagement position in which the friction wheel 17 co-operates both with the back 20 of the belt 9 and with the friction pulley 14 and thus the water pump 11 is driven, and a disengagement position, in which the friction wheel 17 is separated from the friction pulley 14 but remains in contact with the back 20 of the belt 9, the water pump 11 being thus uncoupled from the crankshaft 5.

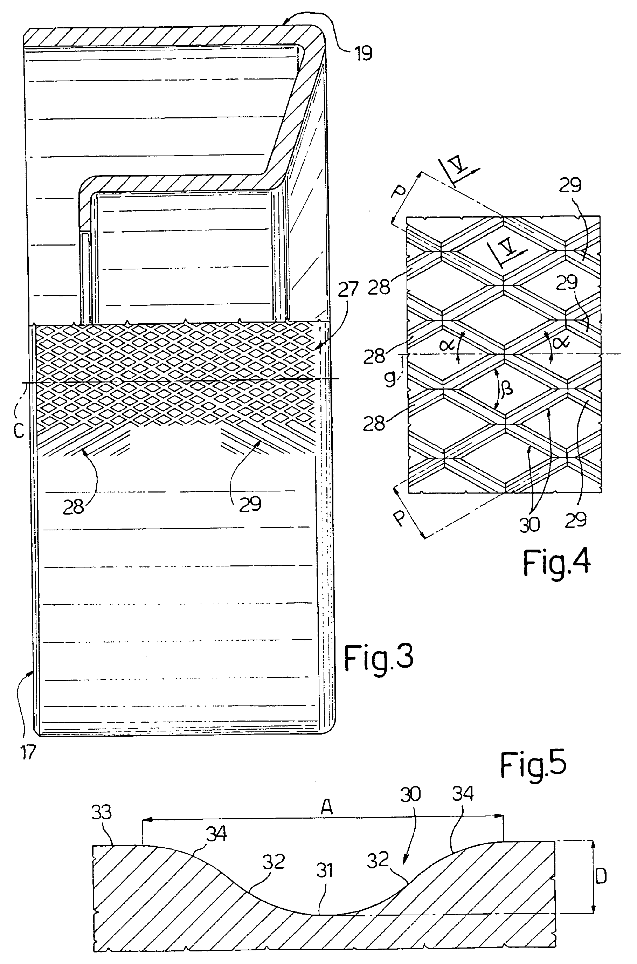

The friction wheel 17 is made of pressed steel and has a substantially cylindrical lateral wall defining a friction surface 19 (Figure 3) obtained by knurling, i.e., provided with a plurality of impressions obtained via roll-forming.

The knurling pattern 27 of the friction surface 19 is formed by two mutually inclined sheaves 28, 29 of rectilinear impressions 30 intersecting each other to form adjacent rhombuses (Figure 3 and 4). Each sheave is formed by parallel, rectilinear impressions 30 spaced by a distance or pitch P, and the two 28, 29 sheaves are inclined in opposite directions with respect to the generatrices g (Figure 4) of the friction surface 19. The angle α formed between each impression 30 and generatrices g ranges from 15° to 75°, and preferably between 15° and 45°. Most preferably, the angle is 30°. In the most preferred embodiment, the impressions 30 of the two sheaves mutually intersect forming angles β of 60°.

In cross-section (Figure 5), the impressions 30 have a rounded bottom line 31 and flex-shaped flanks 32 which are smoothly connected both to the bottom line 31 and to the top line 33 of the profile defined by the cylindrical outer profile of friction surface 19. The flanks 32 form with the top line 33 transition areas 34 having a curvature radius greater than 0.05 mm and preferably of about 0.1 mm.

In figure 5, A and D designate the width and depth of the impressions 30, respectively.

In order to achieve good balance between the contrasting requirements of reduced slippage in wet conditions (i.e. good water drainage), belt wear and reduced noise generation, the following relations preferably apply:
A/P = 0.15-0.5 (preferred value: 0.25)
A/D = 5-10 (preferred value: 7,5)
The preferred values of P, A and D are 1.2, 0.3 and 0.04 mm, respectively.

Preferably, the back 20 of the belt 9 comprises an embossed antiwear surface layer 21.
The antiwear surface layer 21 comprises a fabric 22 that is so textured that warp and weft form a succession of relieves and recesses which define an embossed surface that moreover improves mechanical adhesion. The dimensions of relieves and recesses are preferably smaller that one millimeter.

In particular, the fabric 22 is preferably constituted by a knitted cotton/polyester fabric or a polymeric material, preferably an aliphatic or aromatic polyamide, even more preferably a 6/6 polyamide with high thermal resistance and high toughness.

The fabric 22 can also be of the type in which each thread of weft is constituted by an elastic thread as a core and by at least one composite thread wound on the elastic thread, where the composite thread comprises a thread with high thermal and mechanical resistance and at least one coating thread wound on the thread with high thermal and mechanical resistance.

The friction pulley 14 comprises a supporting disc 24 and a friction annulus 25 made of elastomeric material, which is set peripherally on the supporting disc 24 and has a friction surface 26 co-operating by friction with the friction wheel 17. The friction annulus 25 can be overmoulded around the supporting disc 24 or be constituted by a pre-fabricated endless belt that is interference-fitted around the supporting disc 24. Preferably, the friction annulus 25 is made of an EPDM-based rubber. The friction annulus 25 has a hardness, measured on the friction surface 26, of 85 to 99 Shore A and preferably of about 94 Shore A.

Optionally, friction surface 26 of the friction annulus 25 can be defined by an antiwear surface layer 21 (Figure 2) including a fabric 22 as described above.

The operation of the friction wheel belt drive 1 is described in what follows.

During the step of engine starting, the actuating unit 18 moves the friction wheel 17 away from the friction pulley 14, while keeping it in contact with the back 20 of the belt 9 (disengagement position). The water pump 11 is thus uncoupled from the crankshaft 5. The IC engine 4 is initially driven by reversible electrical machine 7 which operates as starter motor, and is ignited when a given speed threshold is reached. The actuating unit 18 maintains the friction wheel 17 in the disengaged potion until a warmed-up condition of the IC engine is reached. The actuating unit 18 is then switched and the friction wheel 17 is set in the engagement position and contacts both the back 20 of the belt 9 and the friction annulus 25.

Being made of steel and therefore considerably stiffer than the belt 9 and the friction annulus 25, the friction wheel 17 is undeformed upon contact, and no wedging effect exists.

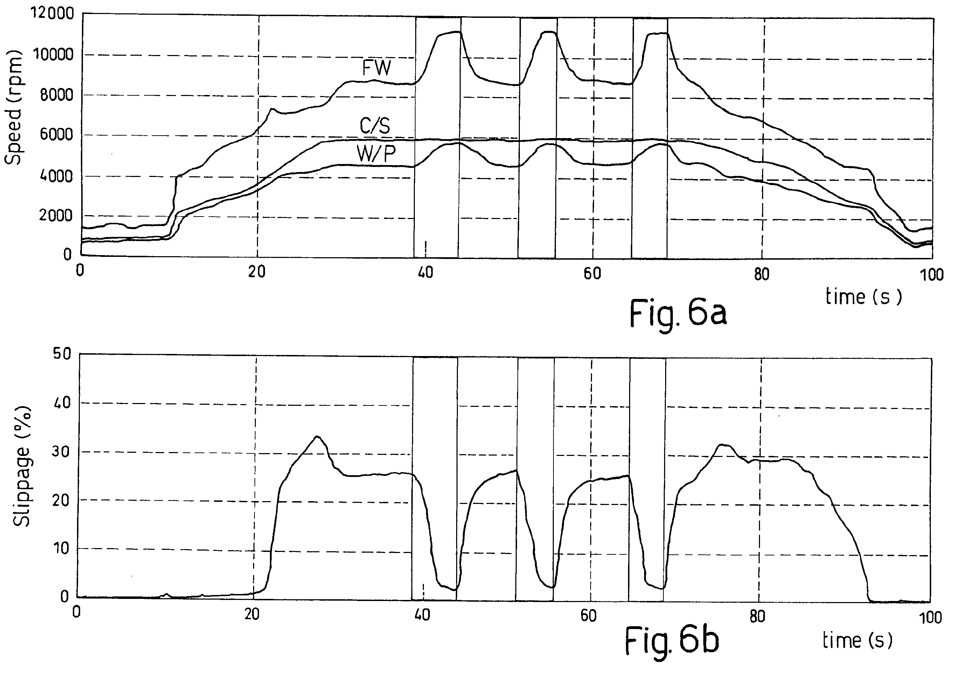

Figures 6a to 9 show the behaviour of the friction wheel according to the present invention, as of various operation features, in comparison with prior art friction wheels.

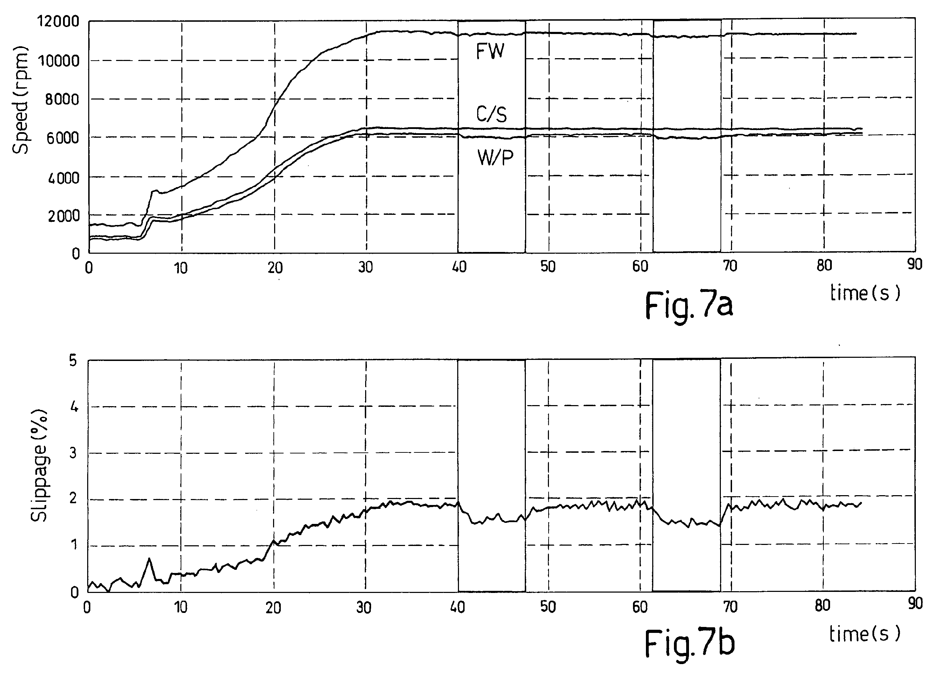

In particular, Figures 6a, 7a are diagrams showing the speed of the water pump pulley 14 (curve W/P), of the crankshaft pulley 4 (curve C/S) and of the friction wheel 17 (curve FW) as a function of time, in an acceleration test in alternated wet and dry conditions. For the purposes of this test, the friction wheel 17 was always maintained in the engaged position. Water was sprayed on friction surfaces to maintain them wet except for short time intervals (highlighted in the diagram) spaced in time after engine acceleration. Figures 6b, 7b shows the speed difference or slippage between the crankshaft pulley 4 and the water pump pulley 14, expressed as a percentage of the crankshaft speed.

The test of figures 6a, 6b was carried out using a "flat" friction wheel, i.e. a friction wheel having a cylindrical friction surface 19 with no knurling; the test of figures 7a, 7b was carried out using a friction wheel 17 having a knurled friction surface according to the pattern of figures 3 to 5.

As can be clearly see from comparing the figures, the test with the flat friction wheel resulted in a slippage of about 25% in wet condition, which slippage rapidly reduced to about 3% in the dry condition intervals. Conversely, the test with the knurled friction wheel in accordance with the present invention resulted in a slippage of less than 2% in wet conditions, which is only slightly more than that the slippage value in dry conditions.

The knurled friction wheel 17 according to the present invention is therefore substantially insensitive to water and reveals a substantially steady behaviour both in dry and wet conditions.

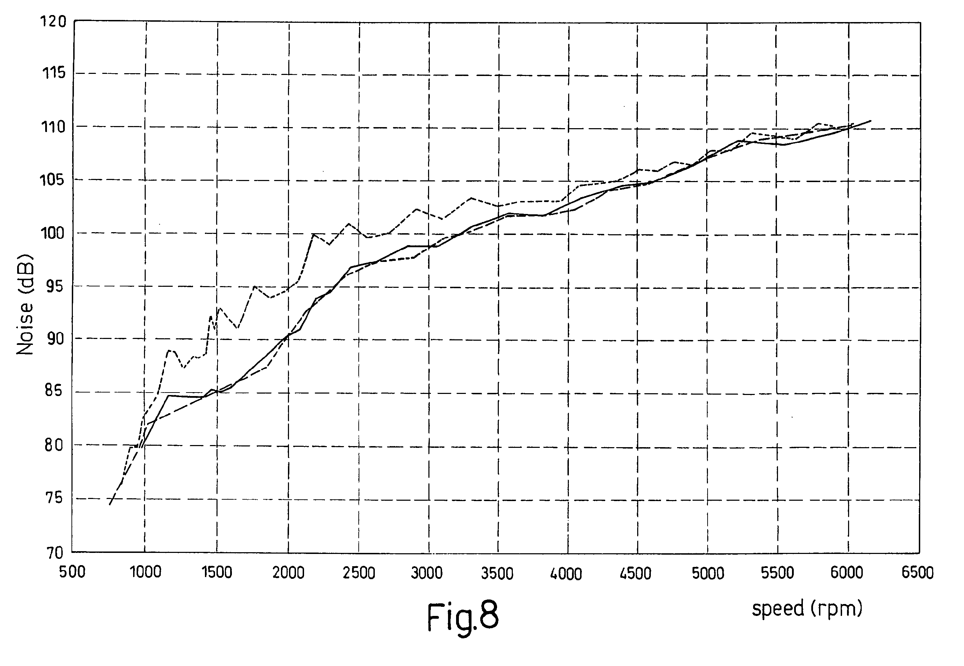

Figure 8 concerns a noise measurement test as a function of engine speed. Full-line, broken-line and dotted-line curves represent the results obtained by using the knurled friction wheel of the invention, a "flat" friction wheel and a tyre-like friction wheel. As can be seen, the knurled friction wheel noise curve is substantially identical to the flat friction wheel noise curve, and considerably better that the one obtained by using a tyre-like friction wheel.

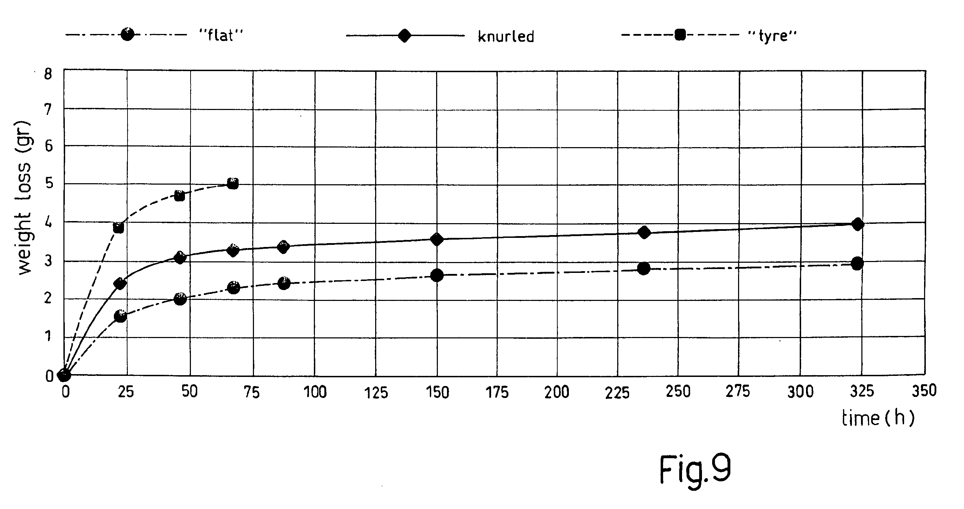

Finally, Figure 9 shows the belt wear produced by friction wheels of different types: "flat" (round markers), knurled (diamond markers), tyre-like (square markers). The test was carried out on a test bench by driving the crankshaft pulley at 6000 rpm, with a brake torque of 1.8 Nm on the water pump pulley 14, at a temperature of 100°C. The belt wear has been measured in terms of weight loss (g) of the belt as a function of time (h).

As can easily be seen, the knurled friction wheel 17 of the present invention entails a slightly grater belt wear (about 1 g more after 300h of operation) with respect to a flat type friction wheel, but far less wear than a sculpted, tyre-type friction wheel which proved to lead to unacceptable wear (already 5 g after less than 70 hours of test).

In conclusion, the use of a knurled metal friction wheel cooperating with the belt back and a "softer" water pump pulley allows optimum performance even in wet conditions without compromising noise generation and belt wear.

Furthermore, since the friction wheel 17 is made entirely of metal, it offers guarantees of duration and reliability, and prevents the wedging effect.

Furthermore, since a friction annulus 25 is applied to the water pump pulley 14 instead of the friction wheel 17, the annulus undergoes the shearing stresses exerted by the friction wheel 17, only, which limits the harmful stresses to a minimum. The use of a friction annulus 25 having a hardness in the disclosed range allows wear of the annulus to be acceptable, without compromising torque transmission.

The interaction between the metal friction wheel 17 and both the belt back 20 and the friction annulus 25 made of elastomeric material can be improved for the purposes of duration, by using the antiwear fabric 21, which increases the reliability of the drive.

The use of a knurled surface enables reduction in the contact pressures on the friction annulus 25 and on the back of the belt 20, being equal the same shearing stresses transmitted.

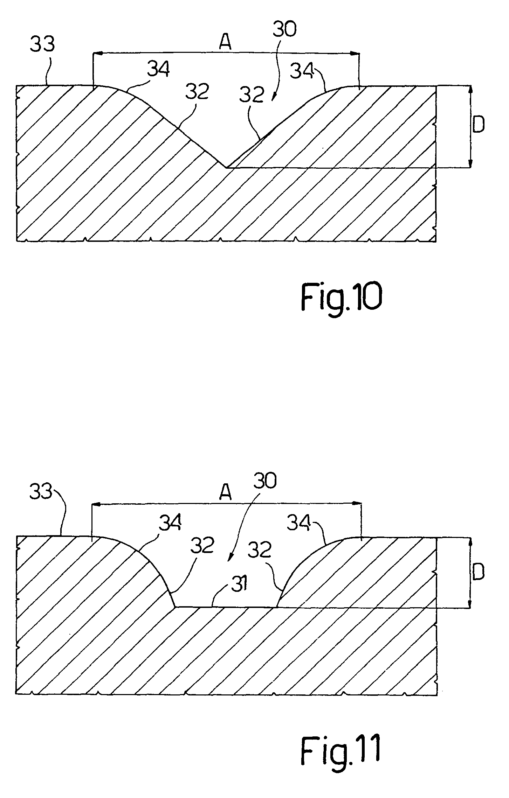

Figures 10 and 11 show alternative cross-section profiles of impressions 30.

More particularly the impression 30 of fig. 10 has a substantially V-shaped profile, with flat flanks 32 converging towards a substantially sharp bottom corner. Flanks 32 are smoothly connected to the top line 33 by rounded transition areas 34 having a curvature radius of 0.05 to 0.1 mm. In this case, A/D ratio may range between 0.5 and 10: a smaller width of the impression can be compensated by a greater depth for the purpose of the volume of water that can be drained off.

The impression of figure 11 has a substantially rectangular profile in cross-section, with a flat bottom lime 31 and curved flanks 32 forming corners therewith. A/D rations between 1 and 10 can be suitable in this case.

Finally, it is clear that modifications and variations can be made to the belt drive with friction wheel described and illustrated herein, without thereby departing from the scope of protection of the present invention, as defined in the annexed claims.

In particular, the friction annulus 25 can be filled with friction materials and consequently be less soft than the belt 9 that must ensure flexibility to enable winding around the pulleys 4, 6 and 8.

Furthermore, the drive 1 can actuate an electrical machine of a traditional type, or alternator.

The friction wheel assembly 10 can be designed for permanently driving the water pump 11; in this case, the actuating unit 18 can be dispensed with.

Optionally, the antiwear surface layer 21 may comprise an anti-abrasive layer 23, set on the outside of the fabric 22. The anti-abrasive layer 23 is constituted by a fluorinated plastomer with the addition of an elastomeric material, and the fluorinated plastomer is present in a greater weight percentage than the elastomeric material.

Preferably, the fluorinated plastomer is a polytetrafluoroethylene-based compound; for example, ZONYL MT 1500 can be used.

Preferably, the elastomeric material with which the fluorinated plastomer is mixed to form the anti-abrasive layer 23 is HNBR; even more preferably, it is an HNBR modified with a zinc salt of polymethacrylic acid; for example, ZEOFORTE ZSC (registered trademark of Nippon Zeon) can be used.

## Claims

1. A belt drive (1) comprising: a first pulley (4) rotatable about a first fixed axis (A) and connected to a crankshaft of an IC engine; at least a second rotatable pulley (6); a transmission belt (9) wound on said first and second pulleys (4, 6) and having a belt back (20); a friction pulley (14) connected to an engine accessory (11) and rotatable about a second fixed axis (D) parallel to said first axis (A); and a friction wheel (17), which is rotatable about a third axis (C) parallel to said first and second axes (A, D) and has a friction surface (19) co-operating with said friction pulley (14) and a back (20) of said belt (9) at a section thereof that is wound around said first pulley (4), said friction pulley (14) comprising a friction annulus (25) softer than, and co-operating with, said friction surface (19) of said friction wheel (17), **characterized in that** said friction wheel (17) is made of metal and said friction surface (19) is knurled, wherein the friction surface (19) of the friction wheel (17) has a knurled pattern (27) formed by at least one sheaf (28, 29) of rectilinear impressions (30) inclined with respect to the friction surface generatrices (g) and said impressions (30) have, in cross-section, a profile including two flanks (32) which are smoothly connected with a top line (33) and form with the top line (33) rounded transition areas (34) having a curvature radius greater than 0.05 mm.

2. A belt drive as claimed in claim 1, **characterized in that** said friction wheel (17) is made of pressed steel.

3. A belt drive as claimed in claims 1 and 2, **characterized in that** said knurling pattern (27) includes two mutually inclined sheaves (28, 29) of rectilinear impressions (30) intersecting each other to form adjacent rhombuses.

4. A belt drive as claimed in claim 3, **characterized in that** the two sheaves (28, 29) are inclined in opposite directions with respect to the generatrices (g) of the friction surface (19).

5. A belt drive as claimed in any of the preceding claims, **characterized in that** each impression (30) forms with the generatrices (g) of said friction surface (19) an angle (α) ranging from 15° to 75°.

6. A belt drive as claimed in claim 5, **characterized in that** said angle (α) ranges between 15° and 45°.

7. A belt drive as claimed in claim 5, **characterized in that** said angle (α) is 30°.

8. A belt drive as claimed in claim 4, **characterized in that** the impressions (30) of the respective sheaves (28, 29) mutually intersect to form an angle of 60°.

9. A belt drive as claimed in any of the preceding claims, **characterized in that** said transition areas (34) have a curvature radius of about 0.1 mm.

10. A belt drive as claimed in any of the preceding claims, **characterized in that** the cross-section profile of said impressions (30) includes a rounded a bottom line (31), said flanks (32) being flex-shaped and smoothly connected to said bottom line (31).

11. A belt drive as claimed in any of the preceding claims, wherein the ratio A/P between a width A and a pitch P of said impressions (30) ranges from 0.15 to 0.5.

12. A belt drive as claimed in claim 11, wherein said ratio A/P is about 0.25.

13. A belt drive as claimed in any of claims 1 to 10, wherein the ratio A/D between width A and depth D of said impressions (30) ranges from 5 to 10.

14. A belt drive as claimed in claim 13, wherein said ratio A/D is about 7,5.

15. A belt drive as claimed in claims 12 and 14, **characterized in that** said pitch P, width A and depth D of said projections (30) are about 1.2, 0.3 and 0.04 mm, respectively.

16. A belt drive as claimed in any of claims 1 to 9, **characterized in that** said impressions have a substantially V-shaped profile in cross section.

17. A belt drive as claimed in claim 16, **characterized in that** the ratio A/D between width A and depth D of said impressions (30) ranges from 0.5 to 10.

18. A belt drive as claimed in any of claims 1 to 9, **characterized in that** said impressions have a substantially rectangular profile in cross section.

19. A belt drive as claimed in claim 16, **characterized in that** the ratio A/D between width A and depth D of said impressions (30) ranges from 1 to 10.

20. A belt drive as claimed in Claim 19, **characterized in that** at least one surface between said friction annulus (25) and said back (20) comprises an antiwear surface layer (21) comprising a fabric (22).

21. A belt drive as claimed in claim 20, **characterized in that** said fabric (22) is a cotton/polyester knitted fabric.

22. A belt drive as claimed in Claim 20, **characterized in that** said fabric (22) comprises fibres made of polymeric material with high thermal resistance and high toughness.

23. A belt drive as claimed in any of claims 20 to 22, **characterized in that** said antiwear surface layer (21) comprises an anti-abrasive layer (23) external to said fabric (22).

24. A belt drive as claimed in Claim 23, **characterized in that** said anti-abrasive layer (23) comprises a polytetrafluoroethylene-based compound.

25. A belt drive as claimed in any one of the preceding claims, **characterized in that** said friction annulus (25) is made of elastomeric material.

26. A belt drive as claimed in claim 25, **characterized in that** said friction annulus (25) has a hardness of 85 to 99 Shore A.

27. A belt drive as claimed in claim 26, **characterized in that** said friction annulus has a hardness of about 94 Shore A.

28. A belt drive as claimed in any one of the preceding claims, **characterized in that** said third axis (C) is mobile for decoupling said friction pulley (14) from said belt (9).

## Patentansprüche

1. Riemenantrieb (1), der umfasst:
eine erste Riemenscheibe (4), die um eine erste feststehende Achse (8) herum gedreht werden kann und mit einer Kurbelwelle eines Verbrennungsmotors verbunden ist;
wenigstens eine zweite drehbare Riemenscheibe (6);
einen Übertragungsriemen (9), der auf die erste und die zweite Riemenscheibe (4, 6) gewickelt ist und eine Riemenrückseite (20) hat;
eine Reibscheibe (14), die mit einem Motorzubehörteil (11) verbunden ist und um eine zweite feststehende Achse (D) parallel zu der ersten Achse (A) gedreht werden kann; und
ein Reibrad (17), das um eine dritte Achse (C) parallel zu der ersten und der zweiten Achse (A, D) gedreht werden kann und eine Reibfläche (19) aufweist, die mit der Reibscheibe (14) und einer Rückseite (20) des Riemens (9) an einem Abschnitt desselben zusammenwirkt, der um die erste Riemenscheibe (4) herumgewickelt ist, wobei die Reibscheibe (14) einen Reibring (25) umfasst, der weicher ist als die Reibfläche (19) des Reibrads (17) und mit ihr zusammenwirkt, **dadurch gekennzeichnet, dass** das Reibrad (17) aus Metall besteht und die Reibfläche (19) gerändelt ist, wobei die Reibfläche (19) des Reibrades (17) ein Rändelmuster (27) aufweist, das durch wenigstens eine Rille (28, 29) aus rechteckigen Vertiefungen (30) gebildet wird, die in Bezug auf die Erzeugenden (g) der Reibfläche schräg verlaufen, und wobei die Vertiefungen (30) im Querschnitt ein Profil haben, das zwei Flanken (32) enthält, die stufenlos mit einer oberen Linie (33) verbunden sind und mit der oberen Linie (33) abgerundete Übergangsbereiche (34) bilden, die einen Krümmungsradius von mehr als 0,05 mm haben.

2. Riemenantrieb nach Anspruch 1, **dadurch gekennzeichnet, dass** das Reibrad (17) aus gepresstem Stahl besteht.

3. Riemenantrieb nach Anspruch 1 und 2, **dadurch gekennzeichnet, dass** das Rändelmuster (27) zwei schräg zueinander verlaufende Rillen (28, 29) aus rechteckigen Vertiefungen (30) enthält, die einander schneiden und aneinandergrenzende Rhomben bilden.

4. Riemenantrieb nach Anspruch 3, **dadurch gekennzeichnet, dass** die zwei Rillen (28, 29) in Bezug auf die Erzeugenden (g) der Reibfläche (19) in einander entgegengesetzten Richtungen schräg verlaufen.

5. Riemenantrieb nach einem der vorangehenden Ansprüche, **dadurch gekennzeichnet, dass** jede Vertiefung (30) mit den Erzeugenden (g) der Reibfläche (19) einen Winkel (α) bildet, der von 15° bis 75° reicht.

6. Riemenantrieb nach Anspruch 5, **dadurch gekennzeichnet, dass** der Winkel (α) zwischen 15° und 45° liegt.

7. Riemenantrieb nach Anspruch 5, **dadurch gekennzeichnet, dass** der Winkel (α) 30° beträgt.

8. Riemenantrieb nach Anspruch 4, **dadurch gekennzeichnet, dass** die Vertiefungen (30) der jeweiligen Rillen (28, 29) einander so schneiden, dass sie einen Winkel von 60° bilden.

9. Riemenantrieb nach einem der vorangehenden Ansprüche, **dadurch gekennzeichnet, dass** die Übergangsbereiche (34) einen Krümmungsradius von ungefähr 0,1 mm haben.

10. Riemenantrieb nach einem der vorangehenden Ansprüche, **dadurch gekennzeichnet, dass** das Querschnittsprofil der Vertiefungen (30) eine abgerundete Bodenlinie (31) enthält, die Flanken (32) gebogen geformt und stufenlos mit der Bodenlinie (31) verbunden sind.

11. Riemenantrieb nach einem der vorangehenden Ansprüche, wobei das Verhältnis A/P zwischen einer Breite A und einem Abstand P der Vertiefungen (30) von 0,15 bis 0,5 reicht.

12. Riemenantrieb nach Anspruch 11, wobei das Verhältnis A/P ungefähr 0,25 beträgt.

13. Riemenantrieb nach einem der Ansprüche 1 bis 10, wobei das Verhältnis A/D zwischen Breite A und Tiefe D der Vertiefungen (30) von 5 bis 10 reicht..

14. Riemenantrieb nach Anspruch 13, wobei das Verhältnis A/D ungefähr 7,5 beträgt.

15. Riemenantrieb nach den Ansprüchen 12 und 14, **dadurch gekennzeichnet, dass** Abstand P, Breite A und Tiefe D der Vorsprünge (30) ungefähr 1,2, 0,3 bzw. 0,04 mm betragen.

16. Riemenantrieb nach einem der Ansprüche 1 bis 9, **dadurch gekennzeichnet, dass** die Vertiefungen im Querschnitt ein im Wesentlichen V-förmiges Profl haben.

17. Riemenantrieb nach Anspruch 16, **dadurch gekennzeichnet, dass** das Verhältnis A/D zwischen Breite A und Tiefe D der Vertiefungen (30) von 0,5 bis 10 reicht.

18. Riemenantrieb nach einem der Ansprüche 1 bis 9, **dadurch gekennzeichnet, dass** die Vertiefungen im Querschnitt ein im Wesentlichen rechteckiges Profil haben.

19. Riemenantrieb nach Anspruch 16, **dadurch gekennzeichnet, dass** das Verhältnis A/D zwischen Breite A und Tiefe D der Vertiefungen (30) von 1 bis 10 reicht.

20. Riemenantrieb nach Anspruch 19, **dadurch gekennzeichnet, dass** wenigstens eine Oberfläche zwischen dem Reibring (25) und der Rückseite (20) eine Verschleißschutz-Oberflächenschicht (21) umfasst, die ein Textilerzeugnis (22) umfasst.

21. Riemenantrieb nach Anspruch 20, **dadurch gekennzeichnet, dass** das Textilerzeugnis (22) ein Baumwoll-Polyester-Gewirk ist.

22. Riemenantrieb nach Anspruch 20, **dadurch gekennzeichnet, dass** das Textilerzeugnis (22) aus Polymermaterial bestehende Fasern mit hoher Wärmebeständigkeit und hoher Zähigkeit umfasst.

23. Riemenantrieb nach einem der Ansprüche 20 bis 22, **dadurch gekennzeichnet, dass** die Verschleißschutz-Oberflächenschicht (21) eine Abriebschutzschicht (23) an der Außenseite des Textilerzeugnisses (22) umfasst.

24. Riemenantrieb nach Anspruch 23, **dadurch gekennzeichnet, dass** die Abriebschutzschicht (23) eine Verbindung auf Basis von Polytetrafluorethylen umfasst.

25. Riemenantrieb nach einem der vorangehenden Ansprüche, **dadurch gekennzeichnet, dass** der Reibring (25) aus Elastomermaterial besteht.

26. Riemenantrieb nach Anspruch 25, **dadurch gekennzeichnet, dass** der Reibring (25) eine Härte von 85 bis 99 nach Shore-A hat.

27. Riemenantrieb nach Anspruch 26, **dadurch gekennzeichnet, dass** der Reibring eine Härte von ungefähr 94 nach Shore-A hat.

28. Riemenantrieb nach einem der vorangehenden Ansprüche, **dadurch gekennzeichnet, dass** die dritte Achse (C) beweglich ist, um die Reibscheibe (14) von dem Riemen (9) zu trennen.

## Revendications

1. Entraînement par courroie (1) comprenant : une première poulie (4) capable de tourner autour d'un premier axe fixe (A) et connectée avec un vilebrequin d'un moteur à combustion interne ; au moins une deuxième poulie capable de tourner (6) ; une courroie de transmission (9) enroulée autour des première et deuxième poulies (4, 6) et possédant un dos de courroie (20) ; une poulie de friction (14) connectée avec un accessoire de moteur (11) et capable de tourner autour d'un deuxième axe fixe (D) qui est parallèle audit premier axe fixe (A) ; et une roue de friction (17), qui est capable de tourner autour d'un troisième axe fixe (C) parallèle auxdits premier et deuxième axes fixes (A, D), et qui possède une surface de friction (19) coopérant avec ladite poulie de friction (14) et un dos (20) de ladite courroie (9) au niveau d'une section du dos qui est enroulée autour de ladite première poulie (4), ladite poulie de friction (14) comprenant une couronne de friction (25) plus souple que, et coopérant avec, ladite surface de friction (19) de ladite roue de friction (17), **caractérisé en ce que** ladite roue de friction (17) est réalisée en métal et ladite surface de friction (19) est moletée, la surface de friction (19) de la roue de friction (17) possédant un motif moleté (27) qui est formé par au moins un faisceau (28, 29) d'impressions rectilignes (30) inclinées par rapport aux génératrices de la surface de friction et lesdites impressions (30) possédant un profil qui, dans un plan de section en coupe, inclut deux flancs (32) connectés avec une ligne supérieure (33) de façon lisse et qui forment des zones de transition arrondies (34) avec la ligne supérieure (33), dont le rayon de courbure est supérieur à 0,05 millimètre.

2. Entraînement par courroie selon la revendication 1, **caractérisé en ce que** ladite roue de friction (17) est réalisée en tôle d'acier.

3. Entraînement par courroie selon les revendications 1 et 2, **caractérisé en ce que** ledit motif moleté (27) inclut deux faisceaux (28, 29) mutuellement inclinés d'impressions rectilignes (30) qui se croisent les unes avec les autres afin de former des losanges adjacents.

4. Entraînement par courroie selon la revendication 3, **caractérisé en ce que** les deux faisceaux (28, 29) sont inclinés selon des directions opposées par rapport aux génératrices (g) de la surface de friction (19).

5. Entraînement par courroie selon l'une des revendications précédentes, **caractérisé en ce que** chaque impression (30) forme un angle (α) compris entre 15° et 75° par rapport aux génératrices (g) de ladite surface de friction (19).

6. Entraînement par courroie selon la revendication 5, **caractérisé en ce que** ledit angle (α) est compris entre 15° et 45°.

7. Entraînement par courroie selon la revendication 5, **caractérisé en ce que** ledit angle (α) est égal à 30°.

8. Entraînement par courroie selon la revendication 4, **caractérisé en ce que** les impressions (30) des faisceaux respectifs (28, 29) se croisent les unes avec les autres afin de former un angle de 60°.

9. Entraînement par courroie selon l'une des revendications précédentes, **caractérisé en ce que** lesdites zones de transition arrondies (34) possèdent un rayon de courbure égal à environ 0,1 millimètre.

10. Entraînement par courroie selon l'une des revendications précédentes, **caractérisé en ce que** le profil de section en coupe desdites impression (30) inclut une ligne de fond arrondie (31), lesdits flancs (32) étant formés par flexion et connectés de façon lisse avec ladite ligne de fond (31).

11. Entraînement par courroie selon l'une des revendications précédentes, dans lequel le rapport A/P entre une largeur A et un pas P desdites impressions (30) s'étend entre 0,15 et 0,5.

12. Entraînement par courroie selon la revendication 11, dans lequel ledit rapport A/P est égal à environ 0,25.

13. Entraînement par courroie selon l'une des revendications 1 à 10, dans lequel le rapport A/D entre la largeur A et la profondeur D desdites impressions (30) s'étend entre 5 et 10.

14. Entraînement par courroie selon la revendication 13, dans lequel ledit rapport A/D est égal à environ 7,5.

15. Entraînement par courroie selon les revendications 12 et 14, **caractérisé en ce que** ledit pas P, ladite largeur A et ladite profondeur D desdites projections (30) sont respectivement égaux à environ 1,2, 0,3 et 0,04 millimètre.

16. Entraînement par courroie selon l'une des revendications 1 à 9, **caractérisé en ce que** lesdites impressions possèdent un profil de section en coupe à la forme essentiellement en V.

17. Entraînement par courroie selon la revendication 16, **caractérisé en ce que** le rapport A/D entre la largeur A et la profondeur D desdites impressions (30) s'étend entre 0,5 et 10.

18. Entraînement par courroie selon l'une des revendications 1 à 9, **caractérisé en ce que** lesdites impressions possèdent un profil de section en coupe essentiellement rectangulaire.

19. Entraînement par courroie selon la revendication 16, **caractérisé en ce que** le rapport A/D entre la largeur A et la profondeur D desdites impressions (30) s'étend entre 1 et 10.

20. Entraînement par courroie selon la revendication 19, **caractérisé en ce qu'**au moins une surface située entre ladite couronne de friction (25) et ledit dos (20) possède une couche de surface contre l'usure (21), comprenant un tissu (22).

21. Entraînement par courroie selon la revendication 20, **caractérisé en ce que** ledit tissu (22) est un tricot en coton/polyester.

22. Entraînement par courroie selon la revendication 20, **caractérisé en ce que** ledit tissu (22) comprend des fibres réalisées en matériau polymère avec une résistance thermique élevée et une grande ténacité.

23. Entraînement par courroie selon l'une des revendications 20 à 22, **caractérisé en ce que** ladite couche de surface contre l'usure (21) comprend une couche contre l'abrasion (23) qui est externe audit tissu (22).

24. Entraînement par courroie selon la revendication 23, **caractérisé en ce que** ladite couche contre l'abrasion (23) comprend une composition à base de polytétrafluoréthylène.

25. Entraînement par courroie selon l'une des revendications précédentes, **caractérisé en ce que** ladite couronne de friction (25) est réalisée en matériau polymère.

26. Entraînement par courroie selon la revendication 25, **caractérisé en ce que** ladite couronne de friction (25) possède une dureté comprise entre 85 et 99 Shore A.

27. Entraînement par courroie selon la revendication 26, **caractérisé en ce que** ladite couronne de friction possède une dureté égale à environ 94 Shore A.

28. Entraînement par courroie selon l'une des revendications précédentes, **caractérisé en ce que** ledit troisième axe (C) est mobile, afin de découpler ladite poulie de friction (14) vis - à - vis de ladite courroie (9).
